# EUROPEAN PATENT APPLICATION

(11) **EP 3 335 818 A1**
(43) Date of publication of application: **20.06.2018**
(21) Application number: 17202591.8
(22) Date of filing: 20.11.2017
(51) Int. Cl.: B22F 3/105, B33Y 10/00, B33Y 30/00, B65G 69/20, C21D 6/00, C21D 1/30, C22F 1/10, C22F 1/18, F27B 3/04

(54) **METHODS, APPARATUS, COMPUTER PROGRAMS AND NON-TRANSITORY COMPUTER READABLE STORAGE MEDIUMS FOR MANUFACTURING AN ARTICLE**

(30) Priority: 14.12.2016 GB 201621217
(71) Applicant: Rolls-Royce plc, London SW1E 6AT (GB)
(72) Inventor: Boswell, John, Derby, Derbyshire DE24 8BJ (GB)
(74) Representative: Rolls-Royce plc

(57) **Abstract**

A method of manufacturing an article, the method comprising: controlling an additive manufacturing printer to build an article in a cavity of a build chamber from a powdered material, the build chamber being removable from the additive manufacturing printer and including one or more heaters configured to provide thermal energy to the cavity of the building chamber; and controlling the one or more heaters of the build chamber to heat the article to a predetermined temperature while building the article to prevent the article from cracking while the build chamber and the article are transferred from the additive manufacturing printer to a heater, the predetermined temperature being between the upper temperature of the ductility drop temperature range of the powdered material and the sintering temperature of the powdered material.

## Description

### TECHNOLOGICAL FIELD

The present disclosure concerns methods, apparatus, computer programs and non-transitory computer readable storage mediums for manufacturing an article.

### BACKGROUND

Articles, such as aerospace components, may be manufactured using an additive manufacturing process. For example, an aerospace component may be manufactured using a selective laser melting (SLM) process. Such articles usually have a grain structure in the direction of the build direction and which may be referred to as directionally solidified or anisotropic. After the article has been built by the additive manufacturing printer, it has been found that cracks may appear at the high angle grain boundaries due to incoherency strains between adjacent grains. Such cracks may reduce the useable life of the article and may even render the article unsuitable for its intended end use.

### BRIEF SUMMARY

According to various examples there is provided a method of manufacturing an article, the method comprising: controlling an additive manufacturing printer to build an article in a cavity of a build chamber from a powdered material, the build chamber being removable from the additive manufacturing printer and including one or more heaters configured to provide thermal energy to the cavity of the building chamber; and controlling the one or more heaters of the build chamber to heat the article to a predetermined temperature while building the article to prevent the article from cracking while the build chamber and the article are transferred from the additive manufacturing printer to a heater, the predetermined temperature being between the upper temperature of the ductility drop temperature range of the powdered material and the sintering temperature of the powdered material.

The method may further comprise: controlling transfer of the build chamber from the additive manufacturing printer to the heater.

The build chamber may be transferred from the additive manufacturing printer to the heater within a predetermined period of time to prevent the article from cooling to a temperature below the upper temperature of the ductility drop temperature range.

The method may further comprise controlling the one or more heaters of the build chamber to heat the article during transfer of the build chamber from the additive manufacturing printer to the heater.

The method may further comprise: controlling the heater to provide thermal energy to equalize the temperature of the article and the temperature of the heater.

The method may further comprise controlling an actuator of the heater to rotate the build chamber relative to the heater to remove powdered material from the build chamber.

The method may further comprise: controlling the heater to provide thermal energy to the article to heat the article to a recrystallization temperature.

The method may further comprise: controlling the heater to provide reduced thermal energy to the article to cool the article down from the recrystallization temperature.

The method may further comprise: controlling transfer of the article from the heater to a hot isostatic pressing apparatus.

The additive manufacturing printer may be an electron beam melting (EBM) printer or a selective laser melting (SLM) printer.

The heater may include a furnace or an induction heater.

The powdered material may comprise a nickel superalloy, a titanium alloy, stainless steel, or maraging steel.

The article may include an aerospace component.

The article may include a combustor tile of a gas turbine engine, or a nozzle guide vane of a gas turbine engine, or a seal segment of a gas turbine engine, or a rotor disc of a gas turbine engine, or an aerofoil of a gas turbine engine, or a bladed disc of a gas turbine engine, or a bladed ring of a gas turbine engine, or a borescope port of a gas turbine engine.

The additive manufacturing printer and the heater may be housed in a single housing.

The additive manufacturing printer and the heater may be housed in separate housings and the build chamber is transferable from the additive manufacturing printer to the heater via an air lock.

According to various examples there is provided a computer program that, when read by a computer, causes performance of the method as described in any of the preceding paragraphs.

According to various examples there is provided a non-transitory computer readable storage medium comprising computer readable instructions that, when read by a computer, cause performance of the method as described in any of the preceding paragraphs.

According to various examples there is provided apparatus for manufacturing an article, the apparatus comprising: a controller configured to: control an additive manufacturing printer to build an article in a cavity of a build chamber from a powdered material, the build chamber being removable from the additive manufacturing printer and including one or more heaters configured to provide thermal energy to the cavity of the building chamber; and control the one or more heaters of the build chamber to heat the article to a predetermined temperature while building the article to prevent the article from cracking while the build chamber and the article are transferred from the additive manufacturing printer to a heater, the predetermined temperature being between the upper temperature of the ductility drop temperature range of the powdered material and the sintering temperature of the powdered material.

The controller may be configured to: control transfer of the build chamber from the additive manufacturing printer to the heater.

The controller may be configured to control transfer of the build chamber from the additive manufacturing printer to the heater within a predetermined period of time to prevent the article from cooling to a temperature below the ductility drop temperature.

The controller may be configured to control the one or more heaters of the build chamber to heat the article during transfer of the build chamber from the additive manufacturing printer to the heater.

The controller may be configured to: control the heater to provide thermal energy to equalize the temperature of the article and the temperature of the heater.

The controller may be configured to: control an actuator of the heater to rotate the build chamber relative to the heater to remove powdered material from the build chamber.

The controller may be configured to: control the heater to provide thermal energy to the article to heat the article to a recrystallization temperature.

The controller may be configured to: control the heater to provide reduced thermal energy to the article to cool the article down from the recrystallization temperature.

The controller may be configured to: control transfer of the article from the heater to a hot isostatic pressing apparatus.

The additive manufacturing printer may be an electron beam melting (EBM) printer or a selective laser melting (SLM) printer.

The heater may include a furnace or an induction heater.

The powdered material may comprise a nickel superalloy, titanium alloy, stainless steel, or maraging steel.

The article may include an aerospace component.

The article may include a combustor tile of a gas turbine engine, or a nozzle guide vane of a gas turbine engine, or a seal segment of a gas turbine engine, or a rotor disc of a gas turbine engine, or an aerofoil of a gas turbine engine, or a bladed disc of a gas turbine engine, or a bladed ring of a gas turbine engine, or a borescope port of a gas turbine engine.

The additive manufacturing printer and the heater may be housed in a single housing.

The additive manufacturing printer and the heater may be housed in separate housings and the build chamber is transferable from the additive manufacturing printer to the heater via an air lock.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### BRIEF DESCRIPTION

Embodiments will now be described by way of example only, with reference to the Figures, in which:
Fig. 1 illustrates a schematic diagram of apparatus for manufacturing an article according to various examples;
Fig. 2 illustrates a schematic diagram of another apparatus for manufacturing an article according to various examples;
Fig. 3 illustrates a flow diagram of a method of manufacturing an article according to various examples; and
Fig. 4 illustrates a graph of temperature versus time for manufacturing an article according to various examples.

### DETAILED DESCRIPTION

In the following description, the terms 'connected' and 'coupled' mean operationally connected and coupled. It should be appreciated that there may be any number of intervening components between the mentioned features, including no intervening components.

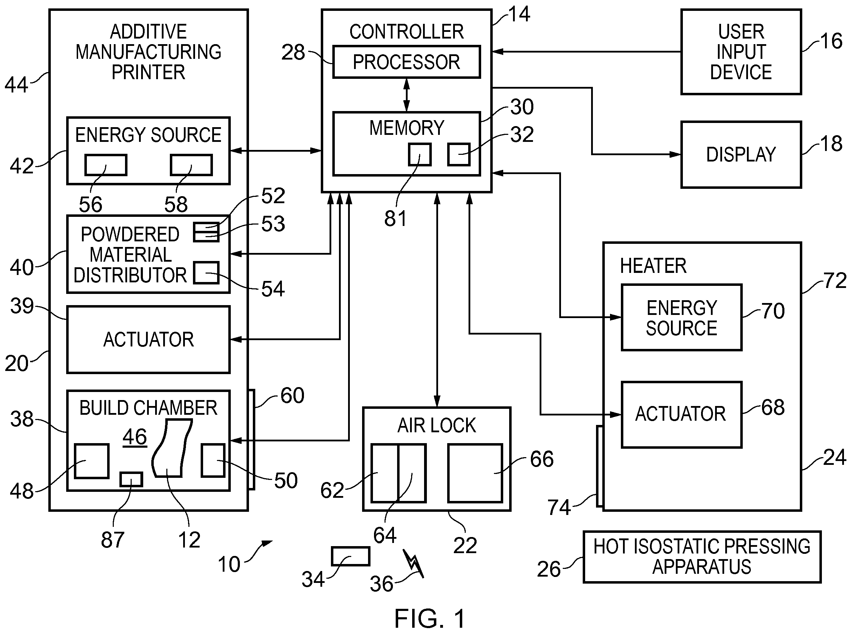

Fig. 1 illustrates a schematic diagram of apparatus 10 for manufacturing an article 12 according to various examples. The apparatus 10 includes a controller 14, a user input device 16, a display 18, an additive manufacturing printer 20, an airlock 22, and a heater 24. In some examples, the apparatus 10 may additionally include a hot isostatic pressing apparatus 26.

In some examples, the apparatus 10 may be a module. As used herein, the wording 'module' refers to a device or apparatus where one or more features are included at a later time and, possibly, by another manufacturer or by an end user. For example, where the apparatus 10 is a module, the apparatus 10 may only include the controller 14, and the remaining features (namely, the user input device 16, the display 18, the additive manufacturing printer 20, the airlock 22, the heater 24, and the hot isostatic pressing apparatus 26) may be added by another manufacturer, or by an end user.

The controller 14, the user input device 16, the display 18, the additive manufacturing printer 20, the airlock 22, the heater 24, and the hot isostatic pressing apparatus 26 may be coupled to one another via a wireless link and may consequently comprise transceiver circuitry and one or more antennas. Additionally or alternatively, the controller 14, the user input device 16, the display 18, the additive manufacturing printer 20, the airlock 22, the heater 24, and the hot isostatic pressing apparatus 26 may be coupled to one another via a wired link and may consequently comprise interface circuitry for connecting to cables (such as a Universal Serial Bus (USB) socket). It should be appreciated that the controller 14, the user input device 16, display 18, the additive manufacturing printer 20, the airlock 22, the heater 24 and the hot isostatic pressing apparatus 26 may be coupled to one another via any combination of wired and wireless links.

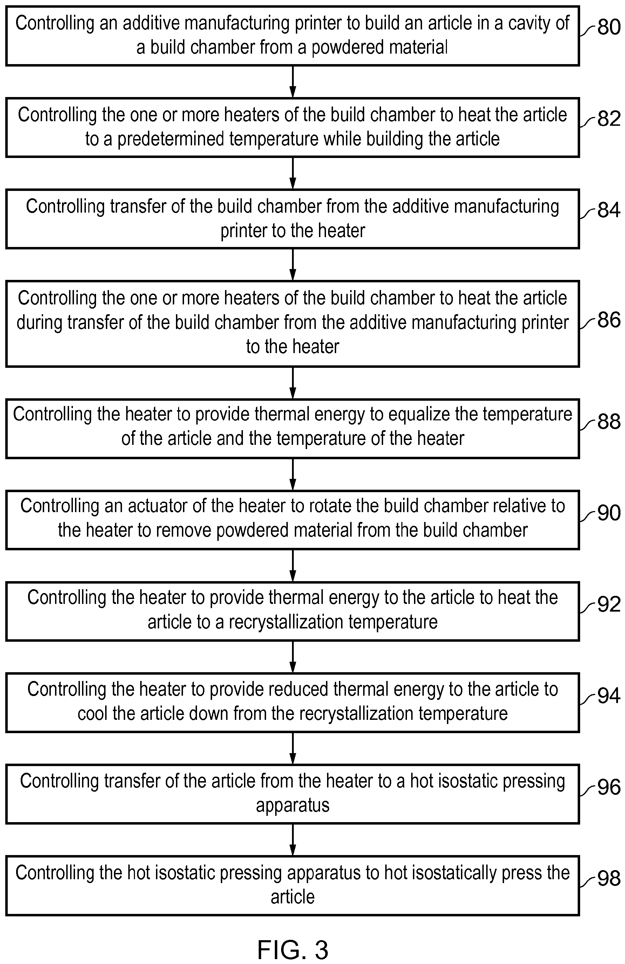

The controller 14 may comprise any suitable circuitry to cause performance of the methods described herein and as illustrated in Fig. 3. The controller 14 may comprise: control circuitry; and/or processor circuitry; and/or at least one application specific integrated circuit (ASIC); and/or at least one field programmable gate array (FPGA); and/or single or multi-processor architectures; and/or sequential/parallel architectures; and/or at least one programmable logic controllers (PLCs); and/or at least one microprocessor; and/or at least one microcontroller; and/or a central processing unit (CPU); and/or a graphics processing unit (GPU), to perform the methods.

The controller 14 may be located in the additive manufacturing printer 20, or may be located in the heater 24, or may be distributed between the additive manufacturing printer 20 and the heater 24. In some examples, the controller 14 may be located remote from the additive manufacturing printer 20 and may be located remote from the heater 24 (in other words, the controller 14 is not located in the additive manufacturing printer 20 or in the heater 24). For example, the controller 14 may be located in the 'cloud' and may be connected to the user input device 16, the display 18, the additive manufacturing printer 20, the airlock 22, the heater 24, and the hot isostatic pressing apparatus 26 via the internet.

In various examples, the controller 14 may comprise at least one processor 28 and at least one memory 30. The memory 30 stores a computer program 32 comprising computer readable instructions that, when read by the processor 28, causes performance of the methods described herein, and as illustrated in Fig. 3. The computer program 32 may be software or firmware, or may be a combination of software and firmware.

The processor 28 may include at least one microprocessor and may comprise a single core processor, may comprise multiple processor cores (such as a dual core processor or a quad core processor), or may comprise a plurality of processors (at least one of which may comprise multiple processor cores).

The memory 30 may be any suitable non-transitory computer readable storage medium, data storage device or devices, and may comprise a hard disk and/or solid state memory (such as flash memory). The memory 30 may be permanent non-removable memory, or may be removable memory (such as a universal serial bus (USB) flash drive or a secure digital card). The memory 30 may include: local memory employed during actual execution of the computer program 32; bulk storage; and cache memories which provide temporary storage of at least some computer readable or computer usable program code to reduce the number of times code may be retrieved from bulk storage during execution of the code.

The computer program 32 may be stored on a non-transitory computer readable storage medium 34. The computer program 32 may be transferred from the non-transitory computer readable storage medium 34 to the memory 30. The non-transitory computer readable storage medium 34 may be, for example, a USB flash drive, a secure digital (SD) card, an optical disc (such as a compact disc (CD), a digital versatile disc (DVD) or a Blu-ray disc). In some examples, the computer program 32 may be transferred to the memory 30 via a signal 36 (such as a wireless signal or a wired signal).

Input/output devices may be coupled to the apparatus 10 either directly or through intervening input/output controllers. Various communication adaptors may also be coupled to the controller 14 to enable the apparatus 10 to become coupled to other apparatus or remote printers or storage devices through intervening private or public networks. Non-limiting examples include modems and network adaptors of such communication adaptors.

The user input device 16 may comprise any suitable device for enabling an operator to at least partially control the apparatus 10. For example, the user input device 16 may comprise one or more of: a keyboard, a keypad, a touchpad, a touchscreen display, and a computer mouse. The controller 14 is configured to receive signals from the user input device 16.

The display 18 may be any suitable device for conveying information to a user. For example, the display 18 may be a liquid crystal display (LCD), or a light emitting diode (LED) display, or an active matrix organic light emitting diode (AMOLED) display, or a thin film transistor (TFT) display, or a cathode ray tube (CRT) display. The controller 14 is arranged to provide a signal to the display 18 to cause the display 18 to convey information to the operator.

The additive manufacturing printer 20 may be any suitable additive manufacturing printer (which may also be referred to as a three dimensional printer). For example, the additive manufacturing printer 20 may be (but is not limited to) a selective laser melting (SLM) printer, a selective laser sintering (SLS) printer, a direct metal laser sintering (DMLS) printer, or an electron beam melting (EBM) printer. The additive manufacturing printer 20 includes a build chamber 38, an actuator 39, a powdered material distributor 40, an energy source 42, and a housing 44.

The build chamber 38 is removable from the additive manufacturing printer 20 and may be transferred to the heater 24 via the airlock 22. The build chamber 38 defines a cavity 46 in which the article 12 may be built and includes one or more heaters 48. The build chamber 38 may also include one or more temperature sensors 50.

The one or more heaters 48 are configured to provide thermal energy to the cavity 46 of the build chamber 38 and may be physically and functionally separate from the energy source 42. Alternatively, the one or more heaters 48 may be part of (and are therefore provided by) the energy source 42. Alternatively, the one or more heaters 48 may be distributed between the energy source 42 and a device that is physically and functionally separate from the energy source 42. The controller 14 is configured to control the one or more heaters 48 to provide thermal energy to the cavity 48.

The one or more heaters 48 may include one or more electric resistance heaters that are wrapped around the build chamber 38 and are configured to provide thermal energy to the cavity 46 via conduction. Additionally or alternatively, the one or more heaters 48 may include a radiation heating source (such as one or more quartz lamps) that are configured to provide thermal energy to the cavity 46 via radiation heat transfer. Additionally or alternatively, the one or more heaters 48 may include a solenoid in which an alternating current induces a magnetic field, which in turn induces eddy currents in the article 12, resulting in resistance heating of the article 12.

The one or more temperature sensors 50 are configured to sense one or more temperatures in the cavity 46. For example, the one or more temperature sensors 50 may include one or more resistance temperature detectors (RTDs), or one or more thermocouples (such as a nickel alloy thermocouple, a platinum thermocouple, a platinum/rhodium alloy thermocouple, or a tungsten/rhenium alloy thermocouple). The controller 14 is configured to receive one or more sensed temperatures from the one or more temperature sensors 50.

The actuator 39 is configured to transfer the build chamber 38 from the additive manufacturing printer 20 to the airlock 22. For example, the actuator 39 may include a conveyor belt and a motor that is configured to drive the conveyor belt. The controller 14 is configured to control the operation of the actuator 39 to control the transfer of the build chamber 38 from the additive manufacturing printer 20 to the airlock 22.

The powdered material distributor 40 includes a hopper 52 for storing powdered material 53 and a distributor 54 (such as a scraping knife) for distributing the powdered material 53 from the hopper 52 and across the build chamber 38. The powdered material 53 may be any suitable powdered material for building the article 12. For example, the powdered material 53 may be a powdered nickel superalloy, a powdered titanium alloy, a powdered tungsten alloy, a powdered stainless steel, or a powdered maraging steel. The controller 14 is configured to control the powdered material distributor 40 to distribute powdered material in the build chamber 38.

The energy source 42 includes an energy emitter 56 that is configured to provide energy to powdered material in the build chamber 38 to sinter or melt the powdered material. For example, the energy emitter 56 may comprise a laser or an electron beam emitter. The energy source 42 also includes an actuator 58 that is configured to move the energy emitter 56 relative to the build chamber 38. The actuator 58 may comprise one or more servomotors for moving the energy emitter 56 to enable the energy emitter 56 to sinter or melt a two dimensional shape in an upper layer of the powdered material. The controller 14 is configured to control the operation of the energy source 42. For example, the controller 14 may activate and deactivate the energy emitter 42 to selectively provide energy to powdered material in the build chamber 38. The controller 14 may control the actuator 58 to move the energy emitter 56 relative to the build chamber 38.

The housing 44 of the additive manufacturing printer 20 houses the build chamber 38, the powdered material distributor 40, and the energy source 42. The housing 44 may include an aperture 60 to enable the build chamber 38 to be transferred from the additive manufacturing printer 20 to the airlock 22. In some examples, the housing 44 may be coupled to a plurality of wheels (such as castors) to enable the additive manufacturing printer 20 to be moved within a factory.

The airlock 22 includes a first door 62, a second door 64, and an actuator 66. The airlock 22 may be positioned so that the first door 62 is located adjacent the additive manufacturing printer 20 and so that the second door 64 is located adjacent the heater 24. The actuator 66 may include a conveyor belt and a motor that is configured to drive the conveyor belt. The controller 14 is configured to control the operation of the first door 62, the second door 64, and the actuator 66 to transfer the build chamber 38 between the additive manufacturing printer 20 and the heater 24 (that is, from the first door 62 to the second door 64, and from the second door 64 to the first door 62). In some examples, the airlock 22 may be coupled to a plurality of wheels (such as castors) to enable the airlock 22 to be moved within a factory.

The heater 24 is configured to receive the build chamber 38 therein and to provide thermal energy to the article 12 to heat the article 12 to a recovery, stress relief or recrystallization temperature. The heater 24 includes an actuator 68, an energy source 70, and a housing 72.

The actuator 68 is configured to move the build chamber 38 from the airlock 22 to the heater 24. For example, the actuator 68 may include a conveyor belt and a motor for driving the conveyor belt to move the build chamber 38 within the heater 24. The actuator 68 may also be configured to rotate the build chamber 38 to remove powdered material from the build chamber 38. For example, the actuator 68 may include a fixture for holding the build chamber 38, and a motor for rotating the fixture relative to the housing 72. In some examples, the fixture may additionally hold the article 12 to prevent the article 12 from falling out of the build chamber 38 during rotation of the build chamber 38.

The energy source 70 may be any suitable energy source for heating the article 12. In some examples, the heater 24 may be a combustion furnace and the energy source 70 may be fuel that is combusted to provide thermal energy. In other examples, the heater 24 may be an electric arc furnace and the energy source 70 includes one or more electrodes. In further examples, the heater 24 may be an induction furnace and the energy source 70 includes one or more solenoids. The heater 24 (that is, the furnace) may have an inert atmosphere, for example argon, nitrogen or a vacuum. The shielding gas used will depend on the material, for example argon or a vacuum may be used for nickel and titanium alloys, and nitrogen gas (N₂) may be used for steels.

The housing 72 of the heater 24 houses the build chamber 38, the actuator 68, and the energy source 70. The housing 72 may include an aperture 74 through which the build chamber 38 may be transferred from the airlock 66 to the interior of the heater 24. In some examples, the housing 72 may be coupled to a plurality of wheels (such as castors) to enable the heater 24 to be moved within a factory.

The hot isostatic pressing apparatus 26 is configured to hot isostatically press the article 12. In some examples, the controller 14 may be configured to control the operation of the hot isostatic pressing apparatus 26. Furthermore, the apparatus 10 may further comprise a robot (such as a 'pick and place' robot) to transfer the article 12 from the heater 24 to the hot isostatic pressing apparatus 26.

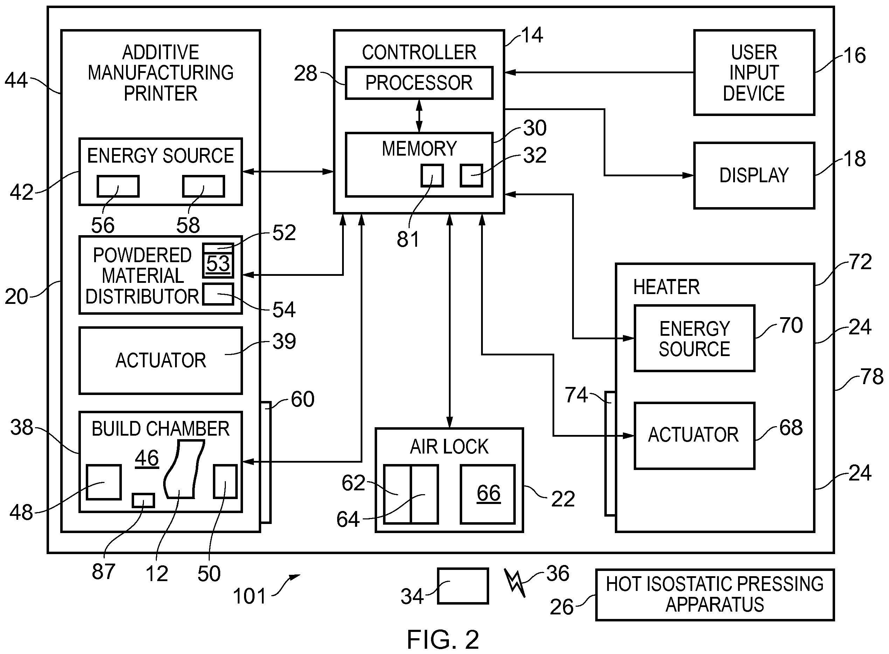

Fig. 2 illustrates a schematic diagram of another apparatus 101 for manufacturing an article 12 according to various examples. The apparatus 101 is similar to the apparatus 10 and where the features are similar, the same reference numerals are used.

The apparatus 101 differs from the apparatus 10 in that the apparatus 101 further comprises a housing 78 that houses the controller 14, the user input device 16, the display 18, the additive manufacturing printer 20, the airlock 22, and the heater 24. Consequently, the apparatus 101 may be a single device for building the article 12 and then heat treating the article 12. The housing 78 may be coupled to a plurality of wheels (such as castors) to enable the apparatus 101 to be moved within a factory.

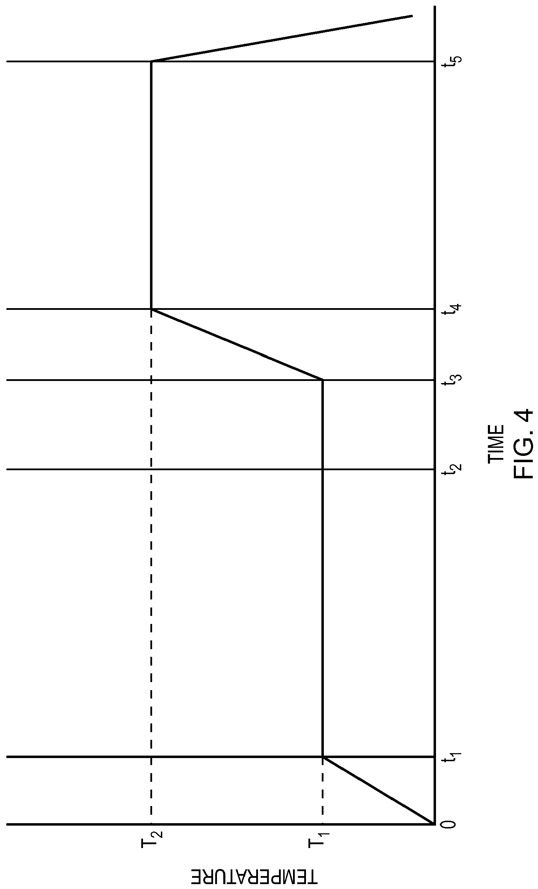

The operation of the apparatus 10, 101 is described in the following paragraphs with reference to Figs. 3 and 4.

At block 80, the method includes controlling the additive manufacturing printer 20 to build the article 12 in the cavity 46 of the build chamber 38 during the time period 0 to t2 illustrated in Fig. 4. For example, the controller 14 may read a three dimensional model 81 of the article 12 stored in the memory 30. The controller 14 may then control the powdered material distributor 40 to distribute the powdered material 53 as a layer in the build chamber 38. Subsequently, the controller 14 may control the energy source 42 to selectively sinter or melt a portion of the powdered material 53 in the build chamber 38. The controller 14 then repeats the process of powdered material distribution and sintering/melting of the powdered material until the article 12 has been built.

At block 82, the method includes controlling the one or more heaters 48 of the build chamber 38 to heat the article 12 to a predetermined temperature T1 while building the article 12. Block 82 may be commenced prior to the commencement of block 80, or may be commenced at the same time as the commencement of block 80, or may be commenced after the commencement of block 80. The predetermined temperature T1 may be any temperature above the ductility drop temperature range of the powdered material 53 and below the sintering temperature of the powdered material 53. The ductility drop temperature range of the powdered material 53 is a range from a lower temperature to an upper temperature. For example, where the powdered material 53 is a nickel superalloy, the lower temperature may be approximately 500 Celsius, and the upper temperature may be approximately 900 Celsius.

For example, the controller 14 may control the one or more heaters 48 to provide thermal energy to the cavity 46 of the build chamber 38 at time 0 as illustrated in Fig. 4. The controller 14 may receive one or more sensed temperatures from the temperature sensor 50 and may control the one or more heaters 48 so that the cavity 46 of the build chamber 38 reaches and is maintained at the predetermined temperature T1 (this occurs at time t1 in Fig. 4). By way of an example, where the powdered material is a nickel superalloy (such as CM247LC), the predetermined temperature may be any temperature greater than 940 Celsius (which is the upper temperature of the ductility drop temperature range of CM247LC).

At block 84, the method may include controlling transfer of the build chamber 38 from the additive manufacturing printer 20 to the heater 24. For example, the controller 14 may control the transfer of the build chamber 38 from the additive manufacturing printer 20 to the heater 24 via the airlock 22 between times t2 and t3 as illustrated in Fig. 4.

The temperature of the article 12 may remain at the predetermined temperature T1 (or may not deviate substantially from the predetermined temperature T1) between times t2 and t3 while the build chamber 38 is being transferred from the additive manufacturing printer 20 to the heater 24. For example, the powdered material within the cavity 46 of the build chamber 38 surrounding the article 12 may insulate the article 12 and prevent the article 12 from cooling. In these examples, the build chamber 38 may be transferred from the additive manufacturing printer 20 to the heater 24 within a predetermined period of time to prevent the article 12 from cooling to a temperature below the upper temperature of the ductility drop temperature range of the article 12.

At block 86, the method may include controlling the one or more heaters 48 of the build chamber 38 to heat the article 12 during transfer of the build chamber 38 from the additive manufacturing printer 20 to the heater 24. For example, the build chamber 38 may comprise a battery 87 for supplying electrical energy to the one or more heaters 48 for heating the article 12 while the build chamber 38 is being transferred from the additive manufacturing printer 20 to the heater 24. The controller 14 is configured to control the one or more heaters 48 to supply sufficient thermal energy at block 86 to prevent the temperature of the article 12 from falling within the ductility drop temperature range of the article 12.

At block 88, the method may include controlling the heater 24 to provide thermal energy to equalize the temperature of the article 12 and the temperature of the heater 24. For example, at a time prior to time t3, the controller 14 may control the energy source 70 to provide thermal energy to increase the temperature of the heater 24 to a temperature that is equal to, or greater than, the upper temperature of the ductility drop temperature range of the article 12 (but less than the sintering temperature of the powdered material).

At block 90, the method may include controlling the actuator 68 of the heater 24 to rotate the build chamber 38 relative to the heater 24 to remove powdered material from the build chamber 38. For example, at or shortly after time t3, the controller 14 may control a fixture of the actuator 68 to hold the build chamber 38 (and the article 12), and then control a motor of the actuator 68 to rotate the build chamber 38 to an angle where the powdered material falls out of the build chamber 38 and into a hopper for recycling.

At block 92, the method may include controlling the heater 24 to provide thermal energy to the article 12 to heat the article 12 to a recrystallization temperature (that is, a temperature that causes stress relief and consolidation of the article 12). For example, at time t3, the controller 14 may control the energy source 70 to provide thermal energy to the article 12 to heat the article 12 to (and in some examples, above) the recovery, stress relief or recrystallization temperature T2 of the article 12. As illustrated in Fig. 4, the temperature of the article 12 increases from T1 to T2 between times t3 and t4, and remains at temperature T2 between times t4 and t5. By way of an example, where the article 12 comprises a nickel superalloy, the recovery, stress relief or recrystallization temperature T2 may be within the range 940 Celsius to 1280 Celsius (where the upper limit is the solidus or melting temperature of the alloy and may be up to 1310 Celsius for some alloys).

At block 94, the method may include controlling the heater 24 to provide reduced thermal energy to the article 12 to cool the article 12 down from the recrystallization temperature T2. For example, at time t5, the controller 14 may control the energy source 70 to gradually reduce the thermal energy provided to the article 12 so that the article 12 cools at a rate of at least 0.6 Celsius per second (that is, at least 40 Celsius per minute).

At block 96, the method may include controlling transfer of the article 12 from the heater 24 to the hot isostatic pressing apparatus 26. For example, once the article 12 has cooled down sufficiently to be handled by a pick and place robot, the controller 14 may control a pick and place robot to move the article 12 from the heater 24 to the hot isostatic pressing apparatus 26. The article 12 may be packed with an insulating material before being loaded into the hot isostatic pressing apparatus 26 to prevent the article 12 from cooling.

At block 98, the method may include controlling the hot isostatic pressing apparatus 26 to hot isostatically press the article 12. For example, the controller 14 may control the hot isostatic pressing apparatus 26 to hot isostatically press the article 12 to reduce the porosity of the article 12.

The apparatus 10, 101 and the methods described herein may provide several advantages. First, the article 12 may be less likely to crack after being built by the additive manufacturing printer 20 because the one or more heaters 48 heat the article 12 to a temperature that is above the ductility drop temperature range and below the sintering temperature of the article 12. Without allowing the article 12 to cool to a temperature below the upper temperature of the ductility drop temperature range, the article 12 is then heat treated by the heater 24 to allow the residual stresses, generated in build, to be relaxed. Consequently, the apparatus 10, 101 and methods may improve the build quality of articles and may be less costly to operate due to reduced scrappage of articles.

Second, by heating the powdered material and the article 12 within the build chamber 38 and then transferring the build chamber 38 to the heater 24, the additive manufacturing printer 20 may build another article while the article 12 is being heat treated by the heater 24. This may advantageously reduce the time that the additive manufacturing printer 20 is idle and may increase the throughput of the apparatus 10, 101.

Third, the rotation of the build chamber 38 within the heater 24 may allow powdered material to be removed and recycled without having to go through the heat treatment process provided by the heater 24 and risk contamination, oxidation or sintering. This may reduce the operating costs of the apparatus 10, 101 (since excess powder may be recycled) and may improve the finish of the article 12 after heated treatment.

Fourth, the article 12 may be fully heat treated following build within the additive manufacturing printer 20. For example, nickel based superalloys may be solution heat treated and aged by the heater 24 following being built by the additive manufacturing apparatus 20. Consequently, the apparatus 10, 101 may simplify the process for manufacturing an article since the article may be built and heat treated at a single location (for example, within one factory building), or by a single device (such as the apparatus 101 illustrated in Fig. 2).

It will be understood that the invention is not limited to the embodiments above-described and various modifications and improvements can be made without departing from the concepts described herein. For example, the different embodiments may take the form of an entirely hardware embodiment, an entirely software embodiment, or an embodiment containing both hardware and software elements.

Except where mutually exclusive, any of the features may be employed separately or in combination with any other features and the disclosure extends to and includes all combinations and sub-combinations of one or more features described herein.

## Claims

1. A method of manufacturing an article, the method comprising:
controlling an additive manufacturing printer to build an article in a cavity of a build chamber from a powdered material, the build chamber being removable from the additive manufacturing printer and including one or more heaters configured to provide thermal energy to the cavity of the building chamber; and
controlling the one or more heaters of the build chamber to heat the article to a predetermined temperature while building the article to prevent the article from cracking while the build chamber and the article are transferred from the additive manufacturing printer to a heater, the predetermined temperature being between the upper temperature of the ductility drop temperature range of the powdered material and the sintering temperature of the powdered material.

2. A method as claimed in claim 1, further comprising: controlling transfer of the build chamber from the additive manufacturing printer to the heater.

3. A method as claimed in claim 2, wherein the build chamber is transferred from the additive manufacturing printer to the heater within a predetermined period of time to prevent the article from cooling to a temperature below the upper temperature of the ductility drop temperature range.

4. A method as claimed in claim 2 or 3, further comprising controlling the one or more heaters of the build chamber to heat the article during transfer of the build chamber from the additive manufacturing printer to the heater.

5. A method as claimed in any of the preceding claims, further comprising:
controlling the heater to provide thermal energy to equalize the temperature of the article and the temperature of the heater.

6. A method as claimed in any of claims 2 to 5, further comprising controlling an actuator of the heater to rotate the build chamber relative to the heater to remove powdered material from the build chamber.

7. A method as claimed in any of the preceding claims, further comprising:
controlling the heater to provide thermal energy to the article to heat the article to a recrystallization temperature.

8. A method as claimed in claim 7, further comprising: controlling the heater to provide reduced thermal energy to the article to cool the article down from the recrystallization temperature.

9. A method as claimed in claim 7 or 8, further comprising: controlling transfer of the article from the heater to a hot isostatic pressing apparatus.

10. A method as claimed in any of the preceding claims, wherein the additive manufacturing printer is an electron beam melting (EBM) printer or a selective laser melting (SLM) printer.

11. A method as claimed in any of the preceding claims, wherein the heater includes a furnace or an induction heater.

12. A method as claimed in any of the preceding claims, wherein the powdered material comprises a nickel superalloy, a titanium alloy, stainless steel, or maraging steel.

13. A method as claimed in any of the preceding claims, wherein the additive manufacturing printer and the heater are housed in a single housing, or wherein the additive manufacturing printer and the heater are housed in separate housings and the build chamber is transferable from the additive manufacturing printer to the heater via an air lock.

14. A computer program that, when read by a computer, causes performance of the method as claimed in any of the preceding claims.

15. Apparatus for manufacturing an article, the apparatus comprising: a controller configured to perform the method as claimed in any of claims 1 to 13.
